# EUROPEAN PATENT APPLICATION

(11) **EP 2 139 269 A1**
(43) Date of publication of application: **30.12.2009**
(21) Application number: 08305297.7
(22) Date of filing: 23.06.2008
(51) Int. Cl.: H04W 4/02, G08B 25/10, G01W 1/10, H04L 29/08

(54) **Method and system for retrieving a lost entity, and cell-based wireless network adapted therefore**

(71) Applicant: Alcatel Lucent, 75008 Paris (FR)
(72) Inventor: Godon, Marc Bruno Frieda, 1840, Londerzeel (BE); Criel, Johan Georges Prosper, 9000, Gent (BE); Brackx, Michael François Albert, 9000, Gent (BE); Van Broeck, Sigurd, 2980, Zoersel (BE); Lou, Zhe, 2000, Antwerpen (BE); Lauwers, Thais, 2950, Kapellen (BE); Trappeniers, Lieven Leopold Albertine, 2200, Herentals (BE); Claeys, Laurence Annie Hugo Marie, 9000, Gent (BE)
(74) Representative: D'Halleweyn, Nele Veerle Trees Gertrudis

(57) **Abstract**

A method for retrieving a lost entity by means of a cell (A,B,C,D) based wireless telecommunication network is disclosed, comprising
- determining a presence probability distribution of the lost entity for a predetermined geographical area; (20) and
- transmitting information of the lost entity to at least one set of predetermined retrieving entities (12), as a function of the probability distribution, by means of the cell based wireless telecommunication network.
Related systems, devices and wireless communication networks have also been provided.

## Description

### Technical field of the invention

The present invention relates to the field of retrieving lost entities, especially to methods and systems making use of a cell-based wireless network. It moreover relates to cell-based wireless networks which are adapted for use in such methods and which are adapted for interacting with such systems.

### Background of the invention

During summer, many children get lost on the beach and must be found back. This requires a lot of effort from for instance the beach guards and parents to trace and find these children back. Beach guards know that children tend to walk downwind when they get lost on the beach. For optimizing the search, it is therefore opportune to alert the beach guards downwind starting from the place where the child was seen the last time. Beach guards busy with the search cannot watch the swimmers, which could lead to risky situations especially during the holiday season when many children are present and getting lost on the beach. Before being able to start searching search people need to be found and need to be informed.

### Summary of the invention

For retrieving a lost entity, search people need to be found and need to be informed. They may receive some description and information about the lost child as for instance, age, name, photograph, time of reporting, and who is also searching, etc.

A technique making use of a state of the art wireless cell-based communication network, would be to broadcast a search alert to all mobile devices as for instance GSMs on the beach, which can be identified and localized via the wireless networking infrastructure. This could be very expensive and result in extra load for the wireless communication network. It may moreover cause unnecessary effects as for instance resulting from panic.

A method for retrieving a lost entity by means of a cell based wireless telecommunication network is disclosed, comprising
determining a presence probability distribution (PPD) of said lost entity for a predetermined geographical area; and transmitting information of the lost entity to at least one set of predetermined retrieving entities, as a function of said probability distribution, by means of a cell based wireless telecommunication network.

For the purpose of the present invention a lost entity may be any entity which is able to displace itself. Typical entities which may be lost are for instance children, animals as for instance dogs and cats, persons with mental sickness or who are drunk or have taken drugs, but also thieves which may escape from the place of theft. It may for instance also be the borderline of a fire (line between burnt and non-burnt area). The cell-based wireless communication network may be, but not only, a GSM network, a GSM, a GPRS, UMTS, WLAN, Bluetooth, network or any other state of the art or future network which is cell-based. The presence probability distribution can be a probability distribution for the presence of the lost entity at a certain location. This probability distribution may be continuous or may be discrete i.e. may be constant for certain sub-areas of the predetermined geographical area (e.g. it may be constant for subareas corresponding with cells of a cell based mobile network). The predetermined geographical area may be determined in various ways.

According to preferred embodiments of the present invention the geographical area is determined partially or fully based on the location where the lost entity was seen for the last time.

According to embodiments of the present invention the geographical area is determined partially of fully based on the time when the lost entity was seen for the last time, or on the location where and time when the lost entity was seen for the last time.

According to preferred embodiments of the present invention the presence probability distribution is determined at least partially based on the location where the lost entity was seen for the last time.

According to embodiments of the present invention the presence probability distribution is determined at least partially based on the time when the lost entity was seen for the last time, or on the location where and time when the lost entity was seen for the last time.

According to embodiments of the present invention the presence probability distribution can be determined at least partially based on environmental parameters. Environmental parameters may be for instance temperature, temperature distribution, wind direction, wind speed, pollution concentration, geographical information, weather information, etc.

The presence probability distribution may also be determined based on results of statistical analysis of historical data patterns of the location of the lost entity (which can be retrieved/monitored by state of the art techniques, as for instance GPS, or GSM networks, etc. This can for instance be based on information on the lost entity which can be retrieved from a presence service to which the lost entity may be subscribed), or can for instance be based on information of predetermined sets of wireless communication network users. Such sets may be for instance sets of users which have a profile that corresponds to the profile of the lost entity.

The presence probability distribution may further be determined by making use of models, which may be empiric.

According to other embodiments of the present invention the presence probability distribution may be based on facts or particularities of the lost entity of they may be based on preferences of the lost entity. For instance the presence probability distribution may be determined in function of the interests of the lost person; a child may be attracted to a playground, or a thief may be attracted to a train station and fire will move in the direction of the expansion of the fire, which is typically in the direction of the wind, if there is any.

A set of predetermined retrieving entities can be predetermined. This set may for instance comprise beach guards, policemen, family members, team mates, class mates, or other professionally or relationally linked sets of entities which may be involved in retrieving the lost entity. The sets of predetermined retrieval entities may be formed based on information from presence services or servers from e.g. mobile network operators for presence-service-registered users.

Transmitting information of the lost entity can be performed by any state of the art communication network architecture and may preferably use the cell-based wireless communication network infrastructure (5). The information of the lost entity may be provided by an information entity which may be for instance in the case of a lost child the mother, who may provide for instance the age, name, a photograph, which may be further complete with time of reporting, who is also searching, etc. A predetermined set of information entities may be allowed to input information into the system. By transmitting information of the lost entity to at least one set of predetermined retrieving entities, panic can be avoided, as only retrieving entities who do not panic (possibly based on some profile of the user residing with the wireless network operator) or have the authority to retrieve are involved, and not everyone in the geographical area. By further limiting the transmission of information of the lost entity in function of a presence probability distribution, again less people and efforts need to be involved without losing substantially any search efficiency.

According to preferred embodiments of the present invention the presence probability distribution (and thus predetermined geographical area) is mapped on a first set of geographically corresponding cells of the cell-based wireless communication network. It is to be noted that the cell-based wireless communication network may cover circular areas or sectors. A cell-based wireless communication network is typically comprising as number of cells which are covering neighboring sub-areas of a certain geographical area, and which are partially overlapping.

According to preferred embodiments of the present invention the information of the lost entity is transmitted to retrieving entities which are present in a second set of cells. The second set of cells is preferably equal to or a subset of the first set of cells, but this can also be different. The second set of cells may for instance comprise cells which are neighboring or close to the predetermined area but not corresponding to this area.

According to preferred embodiments of the present invention the second set of cells is the cell or set of cells with the highest probability or probabilities respectively.

According to certain embodiments of the present invention different further sets of cells may be defined in function of the presence probability distributions such that for instance a search can be performed in a second set of cells where the presence probability is the highest, after which, if not successful the search can be performed in a third set of cells with lower probabilities. A fourth, fifth, ... n set of cells may similarly be used in a stepwise approach for retrieving the lost entity. The subsequent sets of cells used in the stepwise approach may also be based on a time dependent presence probability distribution. For instance after that a second set of cells has been searched corresponding with the cells with the highest probability/probabilities, a new presence probability distribution may be determined after which a third set of cells may be determined again as a set of cells with the highest presence probabilities. This may again be repeated stepwise. Both types of stepwise approaches for retrieving a lost entity may also be combined.

According to embodiments of the present invention the environmental parameters, used in determining the presence probability distribution, are provided by sensor devices which are preferably positioned on the wireless network infrastructure. One of those environmental parameters which may be provided by such a sensor device is the wind direction and/or wind speed and/or temperature (meaning any parameter or any possible combination of any number of those parameters) .

According to an aspect of the present invention a system for retrieving a lost entity is disclosed, adapted for interacting with a cell-based wireless communication network, comprising:
- a means for determining a presence probability distribution of said lost entity for a predetermined geographical area;
- a means for transmitting information of the lost entity to at least one set of predetermined retrieving entities by means of cell-based wireless communication network as a function of the probability distribution.

Aspects, features and advantages of the method according to the present invention, are likewise applicable to the system according to the second aspect of the present invention and vice versa.

According to embodiments the system further comprises a set of sensor devices which are adapted for measuring environmental parameters. They may be adapted for measuring wind direction, wind speed, temperature, air pollution, etc.

According to preferred embodiments the system further comprises a means for inputting environmental parameters measured by the set of sensor devices. The system according to the present invention may further comprise a means for mapping the presence probability distribution on a first set of geographically corresponding cells of the cell-based wireless communication network.

According to embodiments, the system may further comprise a means for transmitting information to retrieving entities which are present in a second set of cells. Any state of the art systems may be used for transmitting such information. For example, WLAN network, Bluetooth networks, GSM, GPRS, UMTS, any cell-based wireless communication network may be used. The information transmitted may be any type of information it may be for instance SMS, MMs, multimedia, voice, photo, etc. As explained for the method aspect of the present invention, correspondingly, the system of the present invention may comprise a means for determining the geographical area based on the location where the lost entity was seen for the last time and/or the time when the lost entity was seen for the last time. The system of the present invention may comprise a means for determining a presence probability distribution based on the location where the lost entity was seen for the last time and/or the time when the lost entity was seen for the last time and/or based on the environmental parameters and/or results of statistical analysis of historical data and/or models and/or facts and/or preferences of the lost entity (meaning any of the above mentioned parameters on itself or any possible combination of any number of those parameters). Depending on the type and quality of available information, different input parameters can be used and combined in the determination of the presence probability distribution.

According to a third aspect of the present invention, a cell-based wireless communication network is disclosed, comprising sensor nodes located at network infrastructure site which are adapted for communicating environmental parameters to a cell-based wireless communication network or to a system according to the second aspect of the present invention. The sensor nodes can communicate environmental parameters to the system by means of or by being operatively coupled to the cell-based wireless network.
According to a fourth aspect of the present invention a wireless communication network infrastructure element is disclosed for use in a wireless communication network that comprises at least one sensor adapted for measuring an environmental parameter, and a means for communicating the resulting measurement to the wireless communication network. This element can be for instance a base station, or a support structure of an antenna.

According to a fifth aspect of the present invention, a device for use in retrieving an entity is described, which it is adapted for determining a presence probability distribution of the entity for a predetermined geographical area.

According to a sixth aspect of the present invention, a module adapted for being comprised in a cell based wireless communication network is disclosed, which is adapted and/or arranged for mapping a presence probability distribution of an entity on a set of geographically corresponding cells of the cell based wireless telecommunication network.

Features and embodiments for the second, third, fourth, fifth and sixth aspect of the present invention, corresponding to features and embodiments of the first and second aspect of the present invention, are similarly considered to be within the scope of the present invention, as will be recognised by the skilled person.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

The functions which are described herein can be implemented using software, firmware (e.g., fixed logic circuitry), hardware, manual processing, or a combination of these implementations. Terms as "module," "component", "functionality," and "logic" as used herein generally represent software, firmware, hardware, or any combination thereof. In software implementation cases, the module, component, functionality, or logic represents program code that performs specified tasks when executed on one or more processor(s) (e.g., any of microprocessors, controllers, and the like). The program code can be stored in one or more computer readable memory devices or storage means. Further, the methods and systems described herein are platform-independent and thus the techniques may be implemented on a variety of commercial computing platforms having a variety of processors.

The methods in accordance with the present invention may also be described in the general context of computer executable instructions. Computer executable instructions can in general include routines, programs, objects, components, data structures, procedures, modules, functions, and the like that perform particular functions or implement particular abstract data types. The methods described herein may also be practiced in a distributed computing environment where functions are performed by remote processing devices that are linked through a communications network. In a distributed computing environment, computer executable instructions may be located in both local and remote computer storage media, including memory storage devices.

### Brief description of the drawings

The accompanying drawings are used to illustrate embodiments of the present invention.
Fig. 1 illustrates a typical situation ion which the method, system and network according to the present invention may be used.
Fig. 2 illustrates a system according to the second aspect of the present invention.
Fig. 3 illustrates an architecture corresponding with systems and methods of embodiments of the present invention.
Fig. 4 further illustrates elements of a possible call flow corresponding to the architecture of Fig. 3.

Reference signs are chosen such that they are the same for similar or equal elements or features in different figures or drawings.

### Description of illustrative embodiments

The above and other advantageous features and objects of the invention will become more apparent and the invention will be better understood from the following detailed description when read in conjunction with the respective drawings.

The description of aspects of the present invention is performed by means of particular embodiments and with reference to certain drawings but the invention is not limited thereto. Depicted figures are only schematic and should not be considered as limiting. E.g. certain elements or features may be shown out of proportion or out of scale with respect to other elements.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

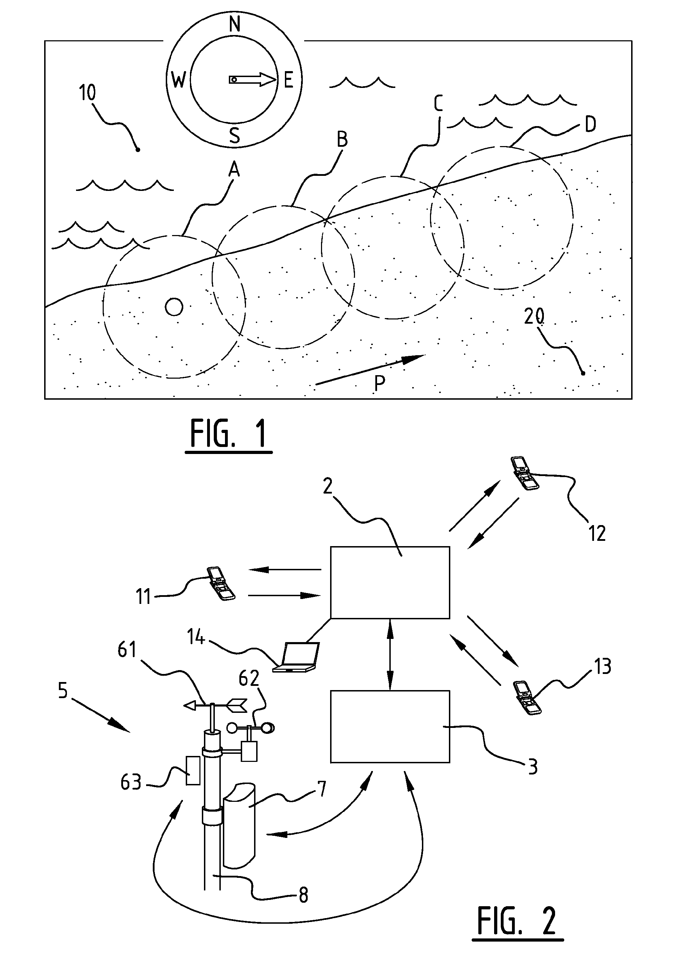

An embodiment of the present invention is described in Fig. 1. A child may be lost on the beach (20) close to the sea (10). The wind direction is indicated by the arrow (P), which is in this case substantially parallel with the substantially straight coastline. A child will typically start moving in the direction of the wind when it gets lost and doesn't find a point of reference. In this case the child will probably follow the direction illustrated by the cells of the wireless communication network; cell A, followed by cell B, followed by cell C, followed by cell D, etc. (supposing that the child got lost somewhere in cell A). The mother of the child which is for instance present in the geographical area of cell A may contact by using her mobile phone (13) the beach rescue application server (2). The beach rescue application server (2) may forward the information to for instance a set of retrieving entities (12) as for instance beach guards or policemen. At the same time the beach rescue application server may be in contact with the rescue manager (11) or rescue management center (14) in which the whole rescue process is followed up. It is to be noted that the term "rescue" has been used here, but that the general term of "retrieving" can be used instead (thus more generic terminology: retrieving application server, retrieving manager, retrieving management, ...). The beach rescue application server (or the retrieving application server) may communicate with the mobile network, e.g. with its open service platform (OSP), which may communicate with the mobile network infrastructure, comprising for instance GSM poles (8), which may become sensor network nodes when provided with appropriate sensors (context sensors), as for instance wind direction (61) and/or wind speed (62) and/or temperature sensors (63). It is an advantage of the present invention that the context sensors or sensor devices can be provided at the already existing wireless network infrastructure as for instance at GSM poles, and no extra infrastructure needs to be provided. Moreover, the sensor devices (or context sensors) may be communicating with the beach rescue application server (retrieving application server) by making use of the mobile network.

According to embodiments these sensor devices (or context sensors) are placed independently of the existing network infrastructure or may be placed at both of these types of locations. It is to be noted that sensor devices, which are already present in a certain geographical area, may be adapted for exchanging environmental parameter information with the system according to the present invention or may be updated in order to be adapted for such use. By taking into account the environmental parameters measured by the sensor devices the system according to the present invention allows to define a geographic area in which the probability for retrieving the lost entity is higher, hereby providing a more efficient way of retrieving a lost entity. By mapping the presence probability distribution on an existing cell-based wireless communication network, the coupling with retrieving entities in a geographic area can be made via their wireless communication devices. This solution also provides the advantage that panic can be avoided. It is to be noted that different architectures can be thought of, as be recognized by the person of ordinary skill. For instance instead of having a lost child one can have a lost dog, or a person who himself is not aware of where he is because of for instance mental sickness or drug effects. In an alternative the lost entity can be the borderline of a fire or a flood wave. The present invention can therefore not only be used for rescue applications but can also be used for safety and security applications as for instance applications used by the police and fire departments. A thief may run from the place of theft and may thereby have certain preferences; he may for instance run towards the highway, or towards the station, he may for example avoid going up in a building. He may prefer going home (useful when identified). These personal preferences of the lost entity may also be taken into account , when determining the presence probability distribution according to the present invention.

Another example situation where the embodiments of the present invention can be used, can be the following; a borderline of a fire, can be seen as a lost entity. People who are in the neighborhood of the fire may be informed via the cell-based wireless communication network of the extent of the fire, the fire direction and other relevant facts, such that the can evacuate in time before the fire comes too close to their homes. The displacement of the fire can be represented by a presence probability distribution.

In another example already illustrated in the previous one, methods and systems according to the present invention can be used to for instance organize a phased evacuation of a certain geographical area. For instance a cloud of pollution in the air may interact with sensor devices located at the network infrastructure and could trigger the phased evacuation of persons (corresponding to retrieving entities) from certain areas. Here the role of the retrieving entities (not retrieving but moving away from where they are) is different, but the method and system according to the present invention can be used. Phased evacuation can also occur in other situations as for instance in case of panic situations in football stadiums, the evacuation of hospitals, the evacuations of highways which are blocked by traffic jams (based on an amount of traffic parameter and corresponding sensor or measurement device), etc.

It will be appreciated that a more accurate and effective rescue or disaster or retrieving management activity can be achieved by the methods, systems and networks according to the present invention. The cell-based wireless communication network can be used more efficiently, resulting in a reduction of network load and costs.

It is to be noted that even if the information is send, broadcasted to all persons present in certain cells, in other words that the set of retrievers comprises all available persons in a certain area, the embodiments of the present invention do provide the advantage of a more efficient search by providing a presence probability distribution determination, prior to doing the search and basing the search thereupon.

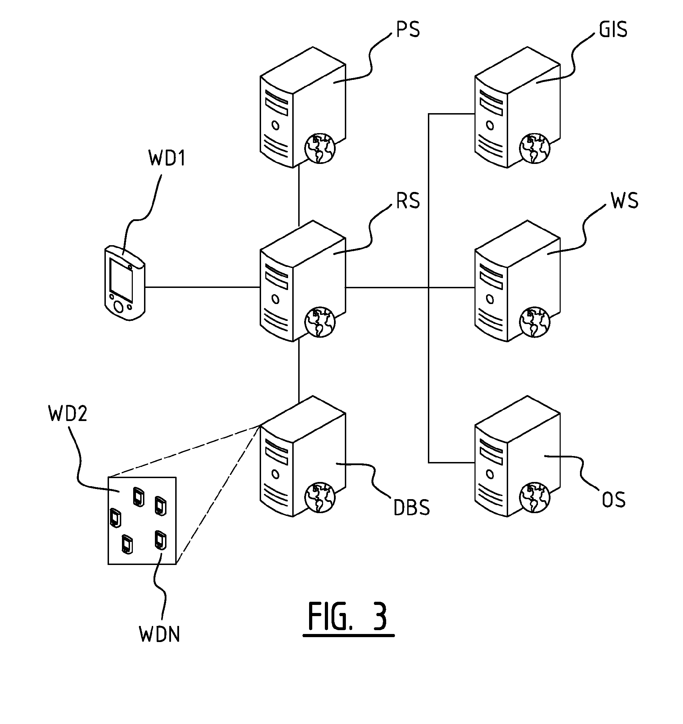

Fig. 3 illustrates an architecture corresponding with systems and methods of embodiments of the present invention. The system can comprise a Presence Service (PS), a Retrieve Service (RS), a Geographical Information Service (GIS), a Weather Service (WS), other optional services (OS) and wireless devices (WD 1 and WD 2, ..., WD N) as for instance mobile handhelds.

The Presence Service (PS) provides the real time communication presence status of the different participants and subject of retrieval known in the retrieval scenario. Client services subscribe to observe an entities' communication presence status. The entities' presence property value changes such as for example changing from online to offline or change in network technology usage can be forwarded to the connected and subscribed client service.

The Retrieve Service (RS) is the service, which manages and executes the retrieve scenario session. For execution and optimization of the retrieve activity the retrieve service collaborates in real time with other networked services such as the Geographical Information Service (GIS), The Presence Service (PS), the Directional Broadcast Service (DBS) and the mobile handhelds of the different actors involved in the retrieval activity. The Retrieve Service (RS) executed for example a scripted scenario on the basis of the determined presence probability distribution status of the retrieval-subjected entity(s). The Retrieve service (RS) invokes the Geographical Information Service (GIS) to retrieve topological and geographical information related to the context of the present or predicted presence probability distribution of the retrieval-subjected entity(s). This is for example done to distribute a local geographical map augmented with information about the presence probability distribution of the retrieval-subjected entity(s) and for example augmented with the presence status and localization of the other actors involved in the retrieve activity. The Retrieve Service invokes a Weather Service (WS) in determining or keeping up to date the influence of weather conditions or predictions on the presence probability distribution of the retrieval-subjected entity(s). Again this information can be distributed to the other actors involved in the retrieval activity as overlaid augmentation to a geographical local map for example for promoting heuristic and experience driven adaptations of the retrieve activity. The Directional Broadcast Service (WS) is invoked by the Retrieve Service (RS) to broadcast the retrieval activity information to the involved actors. The Directional Broadcast Service (WS) is also used to retrieve candidate actors in relation to a given property set such as: geographical position, direction, area of interest, role, qualifications, network technology, presence status, etc.

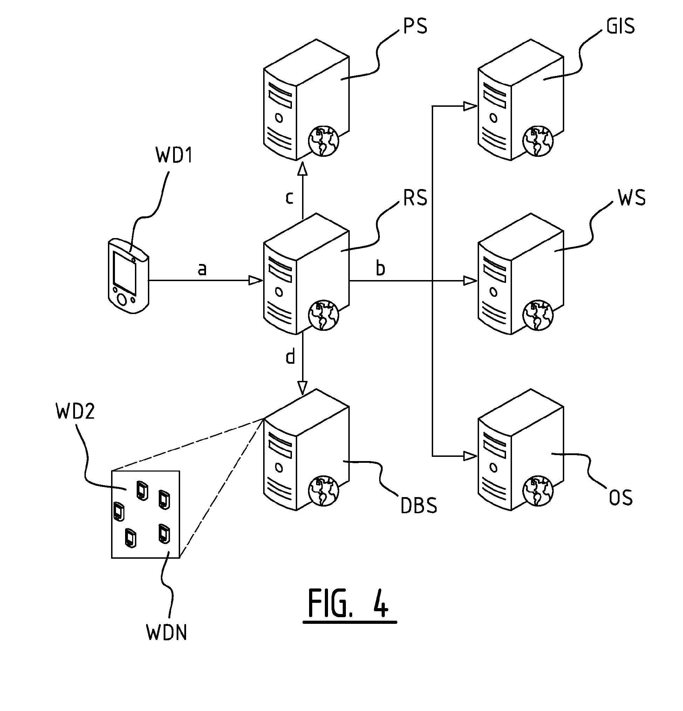

Fig. 4 further illustrates elements of a possible call flow corresponding to the architecture of Fig. 3. After (a) receiving a request call for looking for a lost entity, the RS first based on the received information starts to (b) fetch context, e.g. wind direction, weather, geographical condition, etc. Then the RS consolidates the information, calculates the presence probability density and thus possible locations and regions for the lost entity and lists them with priority. Afterwards, the RS (c) identifies which mobile handhelds are in those regions by querying the PS and then (d) gives mobile IDs to the DBS who will eventually broadcast the rescue message to the identified mobile handhelds. (d) could be iterated until the lost entity is found. Also (b) and (c) may be iterated if necessary, for instance when the models used for the determination of the presence probability distribution is strongly dependent on one of the parameters considered, and such parameters are (expected to) change quickly.

While some embodiments described herein include some but not other features included in other embodiments, combinations of features of different embodiments are meant to be within the scope of the invention, and form different embodiments, as would be understood by the skilled person.

While the principles of the invention have been set out above in connection with specific embodiments, it is to be clearly understood that this description is merely made by way of example and not as a limitation of the scope of protection, which is determined by the appended claims.

## Claims

1. A method for retrieving a lost entity by means of a cell based wireless telecommunication network, **characterized in that** it comprises
- determining a presence probability distribution of said lost entity for a predetermined geographical area; and
- transmitting information of the lost entity to at least one set of predetermined retrieving entities, as a function of said probability distribution, by means of said cell based wireless telecommunication network.

2. A method according to claim 1, further comprising mapping said presence probability distribution on a first set of geographically corresponding cells of said cell based wireless telecommunication network.

3. A method according claim 2, wherein said information is transmitted to retrieving entities which are present in a second set of cells.

4. A method according to any of the previous claims, wherein said presence probability distribution is determined based partially or fully on environmental parameters and/or results of statistical analysis of historical data and/or models and/or facts and/or preferences of the lost entity.

5. A method according to claim 4, wherein said environmental parameters are provided by sensor devices positioned on said wireless network infrastructure.

6. A method according to claim 4 or 5, wherein said environmental parameters comprise wind direction.

7. A system for retrieving a lost entity, adapted for interacting with a cell-based wireless communication network, **characterized in that** it comprises
- a means for determining a presence probability distribution of said lost entity for a predetermined geographical area;
- a means for transmitting information of the lost entity to at least one set of predetermined retrieving entities by means of said cell-based wireless communication network, as a function of said probability distribution.

8. A system according to claim 7, further comprising a set of sensor devices adapted for measuring environmental parameters.

9. A system according to any of claims 7 to 8, further comprising a means for mapping said presence probability distribution on a first set of geographically corresponding cells of said cell based wireless telecommunication network.

10. A system according to any of claims 7 to 9, further comprising a means for transmitting information to retrieving entities which are present in a second set of cells.

11. A system according to any of claims 7 to 10, comprising a means for determining said presence probability distribution based on the location where said lost entity was seen for the last time and/or the time when said lost entity was seen for the last time and/or based on environmental parameters and/or results of statistical analysis of historical data and/or models and/or facts and/or preferences of the lost entity.

12. A cell-based wireless communication network, **characterized in that** it comprises sensor nodes located at network infrastructure sites which are adapted for communicating environmental parameters to said cell-based wireless communication network.

13. A wireless communication network infrastructure element for use in a wireless communication network **characterized in that** it comprises at least one sensor adapted for measuring an environmental parameter, and a means for communicating the resulting measurement to said wireless communication network.

14. A device for use in retrieving an entity, **characterized in that** it is adapted for determining a presence probability distribution of said entity for a predetermined geographical area.

15. A module adapted for being comprised in a cell based wireless communication network, **characterized in that** is adapted or arranged for mapping a presence probability distribution of an entity on a set of geographically corresponding cells of said cell based wireless telecommunication network.
